# EUROPEAN PATENT APPLICATION

(11) **EP 2 722 602 A2**
(43) Date of publication of application: **23.04.2014**
(21) Application number: 13184986.1
(22) Date of filing: 18.09.2013
(51) Int. Cl.: F24F 1/00

(54) **Free-standing evaporative air cooling apparatus**

(30) Priority: 18.10.2012 US 201213654663
(71) Applicant: Port-A-Cool, LLC, Center, TX 75935 (US)
(72) Inventor: Wulf, Benjamin Leon, Center, TX Texas 75935 (US); Shumway, Kerry Lyman, Nacogdoches, TX Texas 75961 (US); Kim, Yun Seok, Chandler, AZ Arizona 85286 (US)
(74) Representative: Stenger, Watzke & Ring

(57) **Abstract**

A free-standing evaporative air cooling system includes a base, at least one air inlet and at least one cooling pad. A neck extends upwardly relative to the base and includes at least one upwardly-oriented air flow passageway in gaseous communication with the air inlet(s). At least one air outlet is disposed proximate to the upper end of the neck and is in gaseous communication with the air flow passageway.

## Description

### FIELD OF THE INVENTION

The present disclosure relates generally to air cooling systems and methods and, in some embodiments, to evaporative air cooling apparatus and methods.

### BACKGROUND OF THE INVENTION

Evaporative air cooling systems are well known and often used for cooling indoor and/or outdoor spaces. Presently, for example, various free-standing, mobile evaporative coolers are known or available, such as the ESAC™ PC evaporative cooler series sold by Munters Italy S.p.A.. Another portable, self-contained, evaporative air cooler is disclosed in U.S. Patent Application Publication Number 2009/0000325 filed by Johnnie Johnson on June 26, 2007. However, these air cooling systems are believed to have various disadvantages. For example, these systems are not useful for effectively cooling an area (where people are located) from above. For another example, it is believed that these systems are limited in the distance they can project and distribute the cooled air. For yet another example, it is believed these systems disperse cooled air in an uneven or very limited pattern.

It should be understood that the above discussion is provided for illustrative purposes only and is not intended to limit the scope or subject matter of the appended claims or those of any related patent application or patent. Thus, none of the appended claims or claims of any related application or patent should be limited by the above discussion or construed to address, include or exclude each or any of the above-cited examples, features and/or disadvantages, merely because of their mention herein.

Accordingly, there exists a need for improved air cooling systems, apparatus and/or methods having one or more of features, attributes or capabilities described or shown in, or as may be apparent from the various sections of this patent.

### BRIEF SUMMARY OF THE DISCLOSURE

In some embodiments, the present disclosure involves a free-standing evaporative air cooling unit having a base configured to rest on, or near, the ground. At least one air inlet and at least one cooling pad are disposed within the base. The air inlet(s) and cooling pad(s) are configured so that outside air drawn into an inlet will pass through at least one cooling pad to cool the air. At least one water distributor is configured to provide water onto the cooling pad. An elongated neck extends upwardly relative to the base. The neck includes an upper end, a lower end and at least one upwardly-oriented air flow passageway in gaseous communication with the air inlet(s). An air blower assembly is in gaseous communication with the air inlet and air flow passageway. The air blower assembly is configured to draw outside air into the air inlet from outside the unit and through the cooling pad, and direct cooled air into the air flow passageway.

In these embodiments, a head is disposed proximate to the upper end of the neck and includes at least one cavity in gaseous communication with the air flow passageway. At least one air diverter is disposed within the head above the air flow passageway. The air diverter is configured to direct cooled air from the air flow passageway in a 360 degree flow pattern. At least one air outlet is disposed within the head above the neck and configured to distribute cooled air from the cavity to outside the unit around the periphery of the neck.

In various embodiments, the present disclosure involves a free-standing evaporative air cooling unit that includes a base configured to rest on, or near, the ground. At least one air inlet and at least one cooling pad are disposed within the base. The air inlet(s) and cooling pad(s) are configured so that outside air drawn into each air inlet will pass through at least one cooling pad to cool the air. At least one water distributor is configured to provide water onto the cooling pad(s). A neck extends upwardly relative to the base and includes at least one upwardly-oriented air flow passageway in gaseous communication with the air inlet. An air blower assembly is disposed between the air inlet and air flow passageway and configured to draw outside air into the air inlet from outside the unit and through at least one cooling pad, and direct cooled air into the air flow passageway. A plurality of air outlets in gaseous communication with the air flow passageway is disposed in an outwardly-facing circular pattern above and around the neck. The air outlets are positioned at least 30 inches above the air blower assembly and configured to distribute cooled air from inside the unit to outside the unit in any among a plurality of flow patterns, including at least one downwardly-angled flow pattern that allows cooled air to be distributed from the unit in a downwardly-angled direction.

The present disclosure includes embodiments of a free-standing evaporative air cooling system that includes a base having an interior cavity and configured to rest on, or near, the ground. At least first and second air inlets and at least first and second associated cooling pads are disposed within the base. The air inlets are disposed on opposite sides of the base and configured so that outside air may be drawn therethrough into the interior cavity of the base from opposing sides thereof and pass through the respective associated cooling pads to cool the air. At least one water distributor is configured to provide water onto the cooling pads. An elongated neck extends upwardly relative to the base. The neck includes an upper end, lower end and at least one upwardly-oriented air flow passageway in gaseous communication with the interior cavity of the base.

In these embodiments, at least one air blower assembly is in gaseous communication with the interior cavity of the base and the air flow passageway. The air blower assembly is configured to draw outside air into the air inlets from outside the system and through the cooling pads, and direct cooled air from the interior cavity of the base into the air flow passageway. At least one air outlet is disposed proximate to the upper end of the neck and is in gaseous communication with the air flow passageway. The at least one air outlet is located at a height of at least 36 inches above the air blower assembly and configured to distribute cooled air from inside the system to outside the system.

In many embodiments, the present disclosure involves a free-standing evaporative air cooling system having a base configured to support the system on the ground. At least one air inlet and at least one cooling pad are disposed within the base. The air inlet(s) and cooling pad(s) are configured so that outside air drawn into each air inlet will pass through at least one cooling pad to cool the air. The lower end of each cooling pad is positioned within the base no greater than 36 inches above the bottom of the base. At least one water distributor is configured to provide water onto the cooling pad(s). A neck extends upwardly from the base and includes an upper end, a lower end and at least one upwardly-oriented air flow passageway in gaseous communication with the air inlet. An air blower assembly is in gaseous communication with the air inlet and the air flow passageway. The air blower assembly is configured to draw outside air into the air inlet from outside the system and through the cooling pad(s), and direct cooled air into the air flow passageway. A plurality of air outlets is disposed proximate to the upper end of the neck and in gaseous communication with the air flow passageway. The air outlets are positioned at least 70 inches above the bottom of the base and configured to distribute cooled air from inside the system to outside the system.

Accordingly, the present disclosure includes features and advantages which are believed to enable it to advance air cooling technology. Characteristics and advantages of the present disclosure described above and additional features and benefits will be readily apparent to those skilled in the art upon consideration of the following detailed description of various embodiments and referring to the accompanying drawings.

### BRIEF DESCRIPTION OF THE DRAWINGS

The following figures are part of the present specification, included to demonstrate certain aspects of various embodiments of this disclosure and referenced in the detailed description herein:

Figure 1 is a side view of an evaporative air cooling unit in accordance with an embodiment of the present disclosure;

Figure 2 is a partial cut-away, rear view of the evaporative air cooling unit of Figure 1;

Figures 3A is a perspective view of an evaporative air cooling unit that includes lighting members and a water misting system in accordance with an embodiment of the present disclosure;

Figure 3B is an enlarged view of the evaporative air cooling unit of Figure 3A;

Figure 4 is a partial cut-away, perspective view of the evaporative air cooling unit of Figure 1;

Figure 5 is an exploded view of various components of the example evaporative cooling unit of claim 1;

Figure 6 is a cut-away and partially exploded view of an evaporative air cooling unit having an ice basket in accordance with an embodiment of the present disclosure;

Figures 7A is a perspective view of an evaporative air cooling unit having retractable rolling members shown in a retracted position in accordance an embodiment of with the present disclosure;

Figures 7B shows the evaporative air cooling unit of Figure 7A with the exemplary rolling members shown in an extended position;

Figures 8A is a perspective view of an evaporative air cooling unit including a pair of exemplary table tops in accordance with an embodiment of the present disclosure;

Figure 8B is a side view of the evaporative air cooling unit of Figure 8A;

Figure 9 is a side view of part of an evaporative air cooling unit having a single air outlet in accordance with an embodiment of the present disclosure;

Figure 10 is a partial cut-away perspective view of an evaporative air cooling unit that includes a water storage vessel in accordance with an embodiment of the present disclosure; and

Figure 11 is a partial cut-away perspective view of an evaporative air cooling unit that includes a battery in accordance with an embodiment of the present disclosure.

### DETAILED DESCRIPTION OF PREFERRED EMBODIMENTS

Characteristics and advantages of the present disclosure and additional features and benefits will be readily apparent to those skilled in the art upon consideration of the following detailed description of exemplary embodiments and referring to the accompanying figures. It should be understood that the description herein and appended drawings, being of example embodiments, are not intended to limit the claims of this patent or any patent or patent application claiming priority hereto. On the contrary, the intention is to cover all modifications, equivalents and alternatives falling within the spirit and scope of the claims. Many changes may be made to the particular embodiments and details disclosed herein without departing from such spirit and scope.

In showing and describing preferred embodiments, common or similar elements are referenced with like or identical reference numerals or are apparent from the appended figures and/or the description herein. When multiple figures refer to a component or feature with the same reference numeral, any description herein of the component or feature with respect to any of the figures applies equally to the other figures to the extent such description does not conflict with a description herein of the other figure(s). The figures are not necessarily to scale and certain features and certain views of the figures may be shown exaggerated in scale or in schematic in the interest of clarity and conciseness.

As used herein and throughout various portions (and headings) of this patent, the terms "invention", "present invention" and variations thereof are not intended to mean every possible embodiment encompassed by this disclosure or any particular claim(s). Thus, the subject matter of each such reference should not be considered as necessary for, or part of, every embodiment hereof or of any particular claim(s) merely because of such reference. The terms "coupled", "connected", "engaged" and the like, and variations thereof, as used herein and in the appended claims are intended to mean either an indirect or direct connection or engagement. Thus, if a first device couples to a second device, that connection may be through a direct connection, or through an indirect connection via other devices and connections.

Certain terms are used herein and in the appended claims to refer to particular components. As one skilled in the art will appreciate, different persons may refer to a component by different names. This document does not intend to distinguish between components that differ in name but not function. Also, the terms "including" and "comprising" are used herein and in the appended claims in an open-ended fashion, and thus should be interpreted to mean "including, but not limited to ...." Further, reference herein and in the appended claims to components and aspects in a singular tense does not necessarily limit the present disclosure or appended claims to only *one* such component or aspect, but should be interpreted generally to mean *one or more,* as may be suitable and desirable in each particular instance.

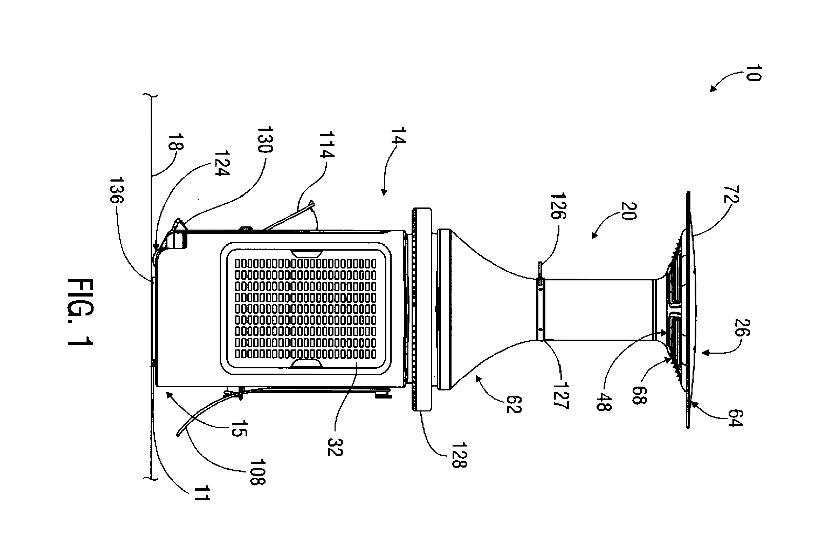

Referring initially to Figure 1, an embodiment of a free-standing evaporative air cooling unit 10 in accordance with the present disclosure is shown. The illustrated cooling unit 10 includes a base 14 configured to rest, or support the unit 10, on the ground 18, a neck 20 extending upwardly relative to the base 14 and a head 26 located at the top of the neck 20. It should be noted, the unit 10 may be supported on any desired surface or area. As used herein, the terms "ground" and variations thereof means and includes the earth's surface or any other surface, a deck, platform, porch, patio or any other area upon which the unit 10 may be placed. Thus, the location of the unit 10 is not limiting upon the present disclosure or appended claims.

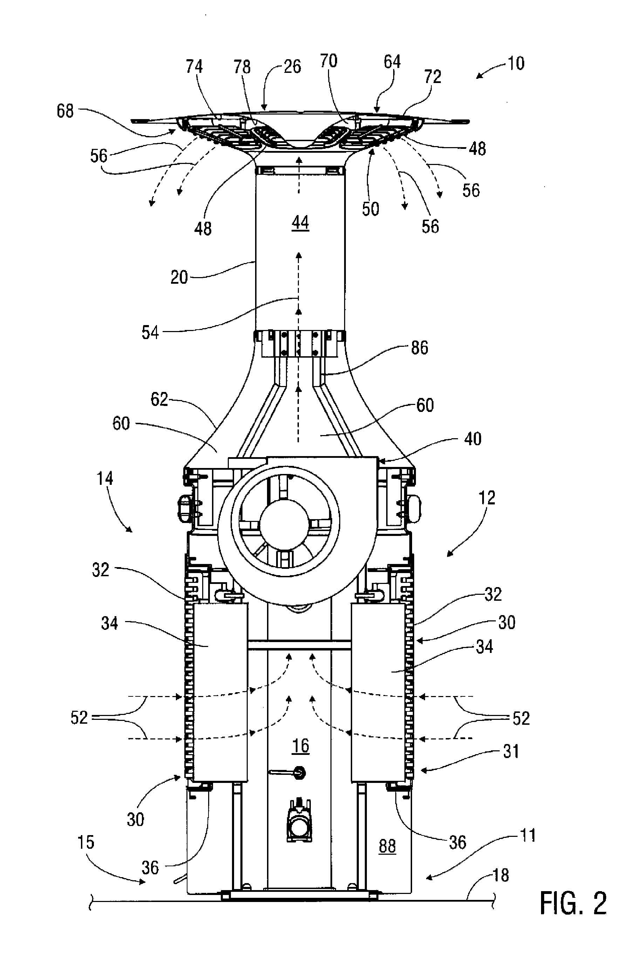

If desired, many or all of the main components of an evaporative cooling system 12 may be contained principally within the base 14, as will be described further below. As shown in Figure 2, the exemplary base 14 includes at least one air inlet 30, cooling pad 34 and air blower assembly 40. However, in other embodiments, these components may not be located within the base 14, or only partially located within the base 14. For example, the inlets 30 and/or air blower assembly 40 may be located within a transition 62, or partially in the base 14 and partially in the transition 62.

The illustrated neck 20 includes at least one air flow passageway 44 in gaseous communication with the interior 16 of the base 14, and the exemplary head 26 includes at least one air outlet 48 in gaseous communication with the passageway 44. In this embodiment, the air blower assembly 40 is configured to draw air from outside the evaporative air cooling unit 10 (referred to herein and in the appended claims as "outside air") into the interior 16 of the base through two air inlets 30 and associated cooling pads 34 to cool the air, as represented by air flow arrows 52. The cooled air is then drawn or pushed up by the air blower assembly 40 into and through the passageway 44 (air flow arrow 54) and out the unit 10 through a plurality of air outlets 48 (air flow arrows 56). The exemplary air outlets 48 are capable of directing cooled air from the unit 10 in various directions or patterns, including at least one downwardly-angled direction or pattern.

Still referring to the embodiment of Figure 2, the air outlets 48 may be positioned at any desired vertical height for any desired purpose. For example, the outlets 48 may be positioned at an approximate height of between 48 - 85 inches from the ground 18, or bottom 15 of the base 14. In the illustrated embodiment, the air outlets 48 are approximately 84 inches from the ground 18. As used through this patent and in the appended claims, the terms "approximately" and variations thereof includes exactly the referenced value and nearly exactly the referenced value, and includes typical variances from the referenced value that can occur during normal operations or use of the referenced equipment due to typical human or equipment error or inaccuracy, or as may be known as an accepted range of error in the relevant industry. Depending upon the height of the air outlets 48 and other variables, the evaporative air cooling unit 10 may, in some instances, be useful for cooling an area from above, such as, for example on a patio, porch, deck, restaurant area, bar area, etc. However, the particular scenarios or venues for use of unit 10 are not limiting upon the present disclosure or appended claims, unless and only the extent as may be explicitly provided therein.

Any components of the unit 10, such as the base 14, air inlets 30, cooling pads 34, air blower assembly 40 and air outlets 48 may be vertically spaced apart, as desired. For example, in some embodiments, the air outlets 48 may be spaced between approximately 24 - 70 inches above the air blower assembly 40. For another example, the lower end 31 of each cooling pad 34 may be spaced no greater than 36 inches from the bottom 15 of the base 14. In the illustrated embodiment, the lower end 31 of each cooling pad 34 is spaced approximately 13 inches above the bottom 15 of the base 14 and the outlets 48 are approximately 42 inches above the blower assembly 40. In this embodiment, air is drawn into the air cooling unit 10 in a generally lateral, or horizontal, orientation, thereafter directed upwardly for some distance and then distributed out of the unit 10 at a particular height.

Still referring to the embodiment of Figure 2, two air inlets 30 are formed in the base 14 on opposite sides thereof. Each exemplary inlet 30 has a removable cover 32 positionable over it. The inlets 30 and covers 32 may have any suitable form, configuration and operation. For example, in some embodiments, the cover 32 may be an aesthetically attractive, perforated plastic or metallic member allowing air flow therethrough and which may be snapped, or bolted, into place. However, in some embodiments, the removable covers 32 may not be included.

The air blower assembly 40 may likewise have any suitable configuration, form and operation. For example, the illustrated air blower assembly 40 includes a centrifugal fan and associated fixed speed motor. In other embodiments, the air blower assembly 40 may include a variable speed motor.

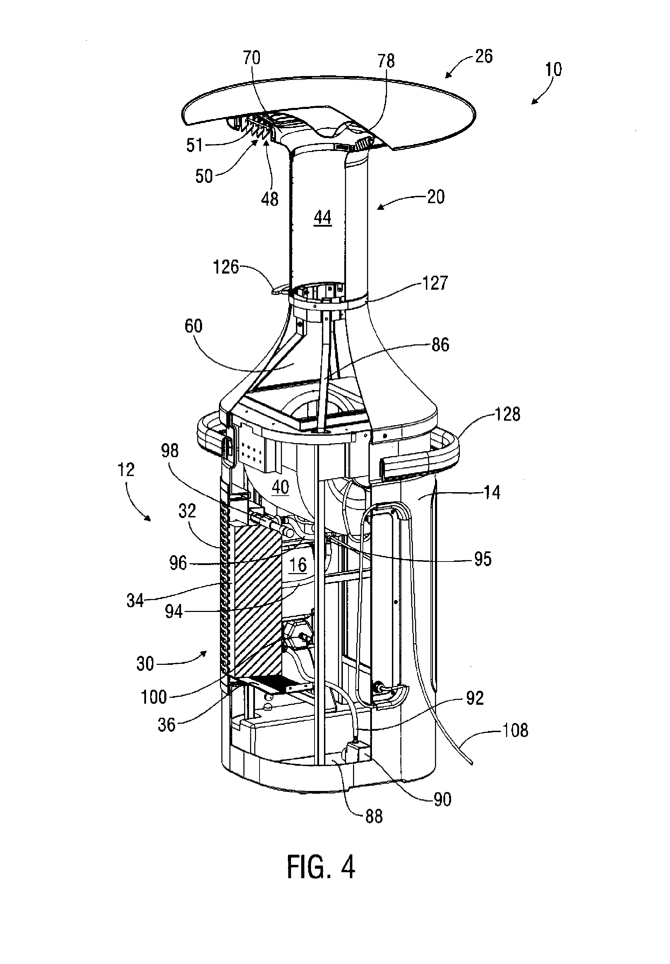

The cooling pad(s) 34 may also have any suitable configuration, form and operation as are and become known. In this example, each pad 34 is a conventional box-shaped evaporative cooling pad having evaporative media therein which absorbs water and allows the water to evaporate therefrom into the passing air flow to cool the air, as is and becomes further known. In some instances, a liquid other than water may be used instead of or in combination with water. As used herein, the terms "water" and variations thereof includes water, other liquids that may be used in an evaporative air cooling system or a combination thereof Each exemplary cooling pads 34 is held in the base 14 on a frame, or rack 36, (e.g. Figure 4) and is removable therefrom for maintenance, replacement or otherwise. Another example embodiment of a cooling pad 34 is a circular shaped cooling pad (not shown) that extends around the entire base 14 so that air flow into each air inlet 30 passes through it.

Still referring to the embodiment of Figure 2, the head 26 (when included) may likewise have any suitable configuration, form and operation. In this example, the head 26 includes an upper portion 64, a lower portion 68 and cavity 70 formed therebetween. The illustrated cavity 70 is in gaseous communication with the air flow passageway 44. The exemplary upper portion 64 includes an outer upper surface 72 that defines the top of the evaporative air cooling unit 10 and an interior surface 74 defining part of the cavity 70, while the lower portion 68 includes the air outlets 48. If desired, the head 26 may include one or more internal air diverters 78, such as to assist in directing air entering the cavity 70 in a particular direction or flow pattern. The air diverter 78 may have any suitable form, configuration and operation. In this example, one air diverter 78 is shown extending downwardly into the cavity 70 from the interior surface 74 of the upper portion 64. The illustrated diverter 78 has a generally V-shape cross-section or profile, and protrudes into the cavity 70 directly above the air flow passageway 44. As cooled air is forced into the cavity 70 from the passageway 44, cooled air will contact the illustrated air diverter 78, which will divert or direct the cooled air in a generally 360 degree outward flow pattern in the cavity 70 and towards the air outlets 48. In this example, the air diverter 78 assists in providing 360 degrees of cooled air distribution from the unit 10.

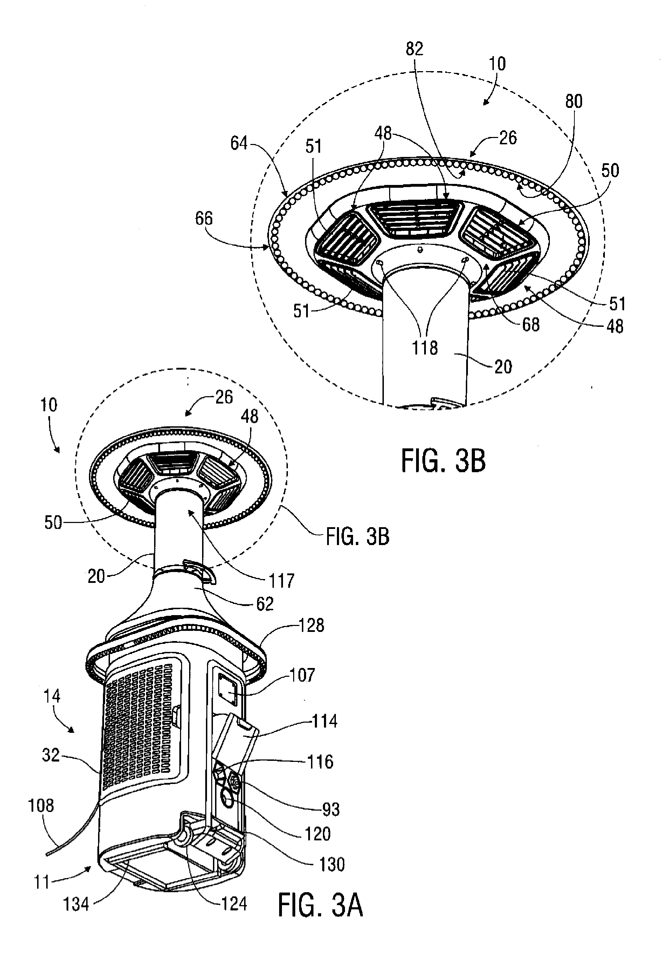

The air outlet(s) 48 may have any suitable form, configuration, location and operation. For example, referring to Figure 3A and 3B, in this embodiment, six outlets 48 are formed in the lower portion 68 of the head 26 in a circular pattern around the neck 20 and are capable of distributing cooled air from inside the evaporative air cooling unit 10 around the entire periphery of the neck 20. Generally, the air flow exiting the illustrated outlets 48 will be distributed from the unit 10 in a 360 degree span or pattern. However, other embodiments may have a different number and arrangement of outlets 48, and/or provide different or additional air flow patterns. For example, one or more air outlets (not shown) may be provided in the unit 10 to distributed cooled air at one more lower location, such as at waist level, or at the height of the air blower assembly 40. In some embodiments, different outlets 48 may be disposed at different heights or positions.

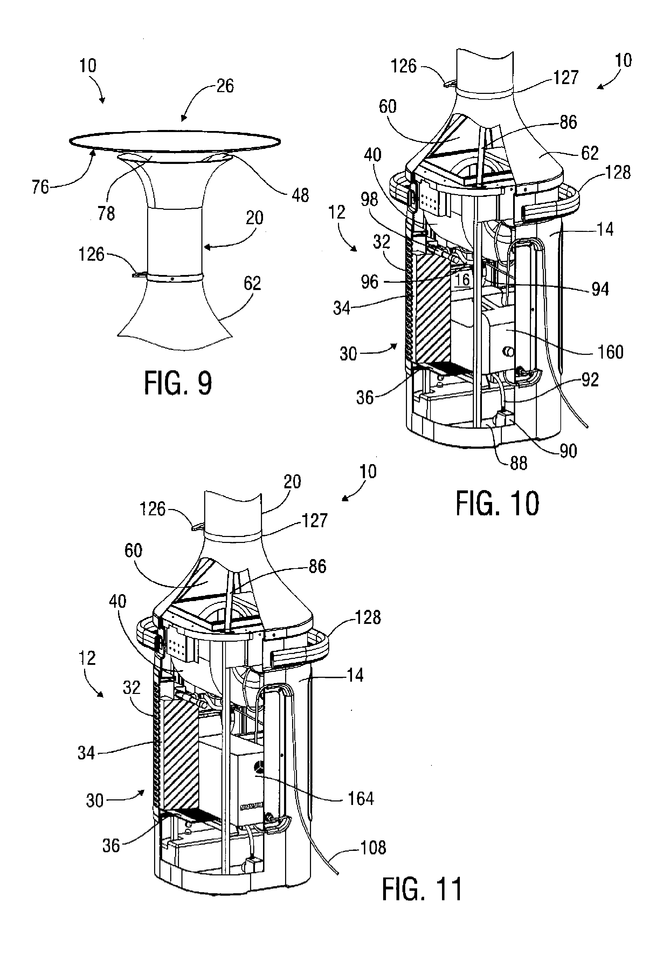

In this example, a louver 50 is disposed over each air outlet 48 to adjust the direction of the air flow out of the associated outlet 48. The louvers 50 may have any suitable form, configuration and operation. In this particular arrangement, each illustrated louver 50 includes a plurality of slats 51 that are adjustable in a range of slat positions to direct the outgoing air flow in a variety of directions or angles. In the illustrated example, the louvers 50 allow directional adjustment of the air flow across a range of generally downward angles. The exemplary louvers 50 are also movable into a closed position, allowing substantially no air flow out of the associated outlet 48. This may be desirable, for example, to provide cooled air on less than all sides of the unit 10 and/or increase the velocity of outgoing air flow in one or more direction. If desired, each louver 50 may be adjustable to provide air distribution ranging from horizontal to substantially straight downwards, and in some embodiments, in an upward direction. However, louvers 50 may not be included in connection with some or all of the outlets 48. Also, the unit 10 may include any desired number of air outlets 48. For example, Figure 9 illustrates a unit 10 having a single air outlet 48 extending around the entire periphery of the neck 20. In this example, the air outlet 48 is a gap, or space, formed between the upper end of the neck 20 and lower surface 76 of head 26. The illustrated diverter 78 and lower surface 76 assist in directing cooled air exiting the outlet 48 in a downwardly angled direction.

Still referring to Figures 3A and 3B, if desired, the evaporative air cooling unit 10 may include one or more lighting members 80 having any suitable form, configuration, location and operation. In this embodiment, the lighting members 80 are formed on an accent light strip 82 affixed to the lower edge 66 of the upper portion 64 of the head 26. The exemplary accent light strip 82 is connected to a power source through an electric power cord (not shown) extending in the interior of the unit 10. One or more lighting members 80 (not shown) may also or instead be located lower on the unit 10, such as around the base 14 or transition 62. In yet other embodiments, no lighting members 80 are included.

Referring back to the embodiment of Figures 1 and 2, the outer upper surface 72 of the upper portion 64 of the head 26 may have an outwardly, downwardly curved shape for any suitable reason. For example, the illustrated outer upper surface 72 is slightly downwardly sloped to allow runoff of rain (or other fluid) from the head 26, and redirect any upwardly discharged cool air from the outlets 48 into a downward direction. However, the outer upper surface 72 can be flat, or have any other desired shape.

Referring specifically to Figure 2, the evaporative air cooling unit 10 may include one or more air acceleration passage 60 disposed between, and in gaseous communication with, the blower assembly 40 and outlets 48. For example, the air acceleration passage 60 may be included to increase the velocity of the cooled air being directed upwardly into the passageway 44. In the illustrated embodiment, a single, inverted funnel-shaped air acceleration passage 60 is provided in the transition 62 between the blower assembly 40 and the air flow passageway 44. The illustrated air acceleration passage 60 effectively produces a venturi effect to compress the upwardly directed air and substantially increase its velocity. In other embodiments, however, the air acceleration passage 60 and/or transition 62 may not be included or provided at other locations in the unit 10. For example, the air acceleration passage(s) 60 may be formed as part of the air flow passageway 44. For another example, the air flow passageway 44 may itself have a funnel or tapered shape, or include one or more narrow portions to effectively serve as one or more air acceleration passage.

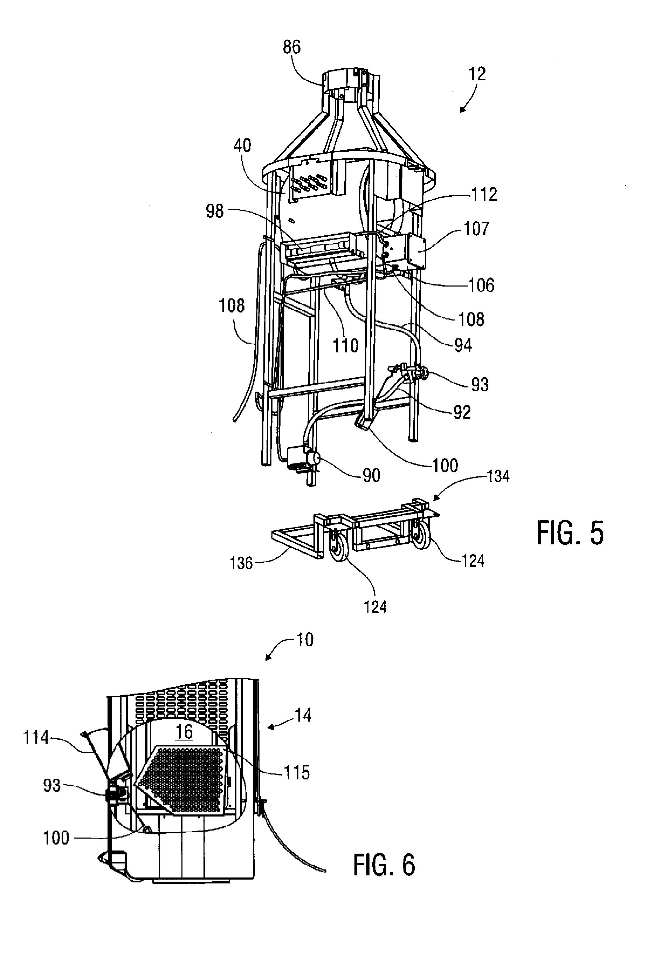

Referring now to Figures 4 and 5, various components of the illustrated evaporative cooling system 12 are shown primarily contained within the base 14. These include power, control and water distribution components shown mounted on an internal chassis 88. In this example, the chassis 88 assists in providing structural support for the entire unit 10. However, a chassis 88 is not required and, in various embodiments, only some, or none, of the components of the evaporative cooling system 12 are located within the base 14.

Referring specifically to Figure 4, the illustrated water distribution components include a liquid tank 88 located in the lower end of the base 14 to hold a supply of water that is provided to the cooling pads 34, as is and becomes further known. In this embodiment, the interior of the base 14 serves as the tank 88. A submersible fluid pump 90 is configured to pump liquid from the illustrated tank 88 to the cooling pads 34 via a water distributor, or spray bar, 98 for each illustrated cooling pad 34. The pump 90 may have any suitable form, configuration and operation. For example, the pump 90 may be a currently available .8 amp submersible pump. In this particular arrangement, the pump 90 pumps the liquid through a pump hose 92 to a supply hose 94, which directs liquid through a supply tee 95 to a spray bar hose 96 for each spray bar 98. If desired, a flow regulator 93 (e.g. Figure 5) may be included, such as at the supply hose 94 to allow an operator to vary the flow of liquid to the cooling pads 34. For example, the flow regulator 93 (see also e.g. Figure 3) may be a conventional gate valve. Each spray bar 98 is located above its corresponding cooling pad 34 and provides liquid thereon to saturate the evaporative media thereof. A float valve 100 is provided in the illustrated tank 88 to determine when the tank 88 is full and stop the flow of water into the supply hose 94, as is and becomes further known. An electronic sensor (not shown) can be included to indicate when water is low in the tank 88, such as via a low water indicator light (not shown) on a control panel 107 (Figure 5).

Referring back to Figure 3, water may be provided into the tank 88 in any suitable manner. In this embodiment, a liquid fill door 114 allows liquid to be poured directly into the tank 88 (e.g. Figure 4). If desired, a removable ice basket 115 (e.g. Figure 6) may be placed inside the tank 88 above the water line (not shown), such as to catch ice dumped in through the fill door 114. This can, for example, allow the unit 10 to distribute a blast of highly cooled air and/or serve as a water source to the tank 88. For another example, a hose adapter 116 in fluid communication with the tank 88 may be included to allow a water hose to be connected to the evaporative air cooling unit 10 for filling the tank 88. For yet another example, referring to Figure 10, in some embodiments, one or more water storage vessels 160 may be used, such as to provide sustained uninterrupted water supply to the unit 10 for a predetermined period (e.g. 3-5 hours) or to serve as an auxiliary water tank to supplement a primary water source. The water storage vessel may have any suitable form, configuration and operation. In this example, the vessel 160 is a removable, refillable and replaceable plastic jug that fits into the lower end of the chassis 86. The illustrated vessel 160 may be inserted into the cavity 16 of the base 14 through the air inlet 30 after removal of the cover 32 and cooling pad 34. The exemplary vessel 160 includes a gravity feed valve (not shown) to allow water to be dispensed therefrom into the tank 88. However, any other arrangement for dispensing water from the vessel 160 could be used, such as a secondary float valve (not shown).

Referring back to Figure 5, the illustrated evaporative cooling system 12 also includes an electronic control module, or controller, 106, which allows pre-programmed and/or selective control of the air blower assembly 40 and pump 90. The control module 106 may have any suitable configuration, form and operation. An example of a presently commercially available control module 106 that may be used with the unit 10 is the digital controller part No. AW4102 by ICM Controls. In the illustrated example, the electronic control module 106 receives electric power from an external power source (not shown) via a main power cord 108 and provides power to the pump 90 via a pump power cord 110, and to the air blower assembly 40 via a blower power cord 112. If desired, a control panel 107, such as a pad with touch controls and LED indicators, may be associated with the control module 106 and accessible on the outside of the evaporative air cooling unit 10 (e.g. Figure 3) for manual actuation of, or to override, the electronic control module 106. For example, the control panel 107 may include a master power indicator, low water indicator, pre-programmed timer control button, pump on/off button, fan on/off button and fan speed control slide button. In other embodiments, such as shown in Figure 10, one or more battery 164 may be included to provide power to the unit 10. The battery 164 may have any form, configuration and operation, and may be a primary or secondary power source for the unit 10. In this example, the battery 164 is configured as a UPS (uninterruptable power supply), as is and becomes further known. The illustrated battery 164 is removable and replaceable, fitting into the lower end of the chassis 86 after insertion into the cavity 16 of the base 14 through an air inlet 30.

With respect to the entire evaporative cooling system 12 and its components described in the preceding paragraphs, the present disclosure and appended claims are not limited to the details described above or shown in the accompanying figures. Any suitable evaporative cooling system 12 may be used in the air cooling unit 10.

Referring back to Figure 3, if desired, the evaporative air cooling unit 10 may include a water misting system 117 to provide a mist of water in the cooled air exiting the unit 10. In the illustrated embodiment, the water misting system 117 includes a series of misting nozzles 118 disposed on the unit 10 below each air outlet 48 sufficient to dispense a water mist into each exiting air stream. The exemplary misting nozzles 118 are fluidly connected via one or more water supply line (not shown) in the unit 10 to a misting water line hose adapter 120. However, any other water supply arrangement may be used. Moreover, various embodiments of the unit 10 do not include a water misting system 117.

The evaporative air cooling unit 10 may, if desired, be mobile, allowing it to be moved between locations. The unit 10 may have any suitable configuration and operation of components to allow the movement thereof. In the embodiment of Figure 1, for example, the unit 10 includes a pair of rolling members 124 useful to roll the unit 10 between positions. In this embodiment, the rolling members 124 are recessed in the unit 10 relative to the bottom 11 of the unit 10 so that they do not rest on the ground when the unit 10 is upright. In other embodiments, there may be one long rolling member 124, or more than two rolling members 124. The rolling members 124 may be any suitable device, such as casters or wheels, capable of supporting and moving the unit 10. In this example, the rolling members 124 are disposed on a carrier 134 (e.g. Figure 5) which is mounted to the bottom 15 of the base 14. The illustrated carrier 134 includes a pedestal 136 which extends below the height of the rolling members 124 and thus serves as the bottom 11 of the unit 10, supporting the unit 10 in an upright position.

Still referring to Figure 1, in order to move the illustrated unit 10, the unit 10 is tilted until the rolling members 124 engage the ground 18 and thereafter pushed or pulled to the desired location. The unit 10 may be tilted and moved in any desired manner. In this embodiment, the unit 10 includes at least one tilt handle 126, main handle 128 and tilt step 130. The exemplary tilt handle 124, which extends from a tilt handle support band 127, is gripped and pulled back and down to tilt the unit 10 until it is supported on the rolling members 124. If desired, the tilt handle 124 and/or support band 127 may be connected, such as by bolts, to the chassis 86 (e.g. Figure 4) to provide support and stability. The operator may place a foot on the tilt step 130 and/or grip the main handle 128 to help balance and hold the exemplary unit 10 in a tilted position and guide the unit 10 between locations.

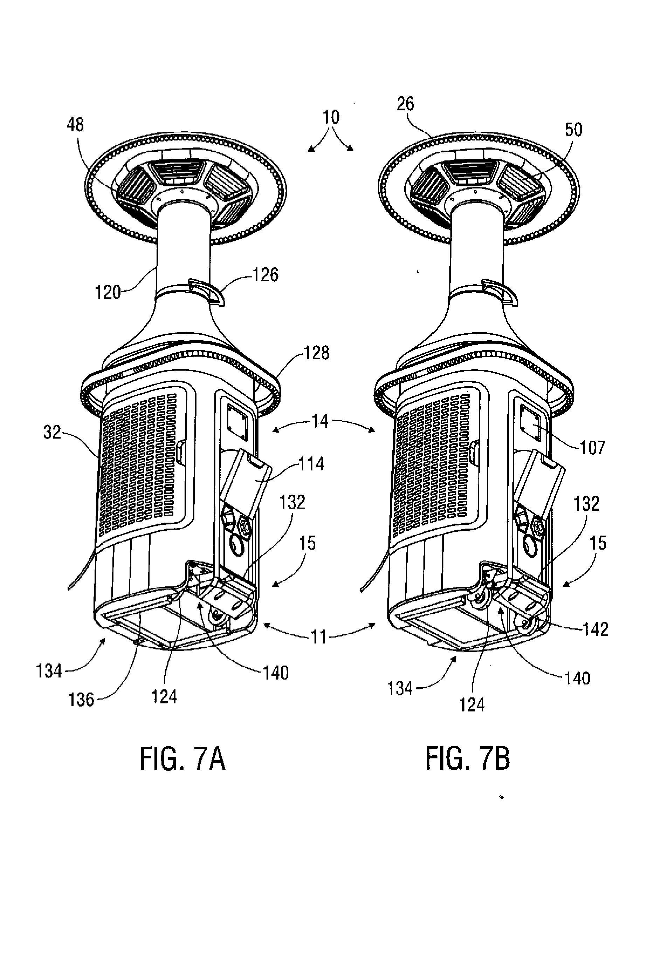

In the embodiment of Figure 7A and 7B, the rolling members 124 are retractable into a cavity 140 formed in the bottom 15 of the base 14. The rolling members 124 are mounted on a carrier 134 having one or more retracting mechanisms 142, and are movable between at least one retracted position (e.g. Figure 7A) and at least one extended position (e.g. Figure 7B) by an operator pushing down on a foot pedal 132. The retracted position of the rolling members 124 is used when the unit 10 is stationary and the extended position used for moving the unit 10.

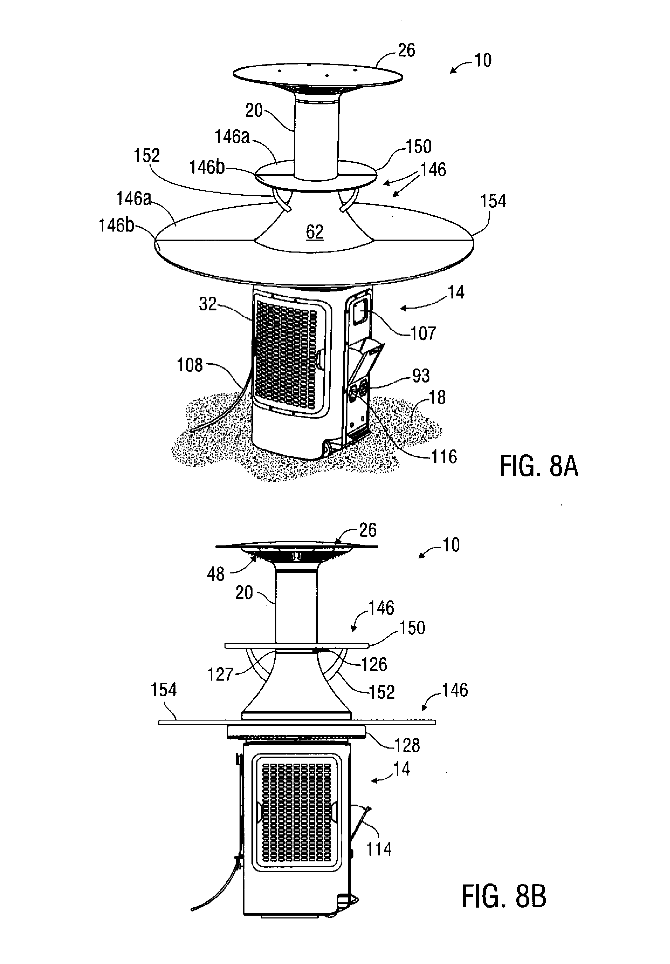

Now referring to Figure 8, if desired, one or more table top 146 may be incorporated into the evaporative air cooling unit 10 for any desired purpose. For a few examples, the table top 140 may be used as a display shelf, or dining or cocktail table. The terms "table top" and variations thereof as used herein means one or more generally horizontally or angularly oriented member extending outwardly from the unit 10. The illustrated table top 146 may have any suitable shape, configuration, form and operation. In this example, two embodiments of table tops 146 are shown, an upper table top 150 and a lower table top 154. The table tops 150, 154 may be used alone or together on the illustrated unit 10. The upper table top 150 is an example of a table top 146 mounted high on the unit 10, such as at a height of approximately 46 inches from the ground 18. The lower table top 154 is an example of a table top 146 that is mounted lower on the unit 10, such as at an approximate height of 30 inches from the ground 18. However, these example locations and uses of the table tops 150 are neither required nor limiting upon the present disclosure or appended claims.

When included, the table top 146 may be engaged with and supported on the unit 10 in any suitable manner. In the examples shown, each table top 146 has first and second sections 146a and 146b, which snap into engagement with one another after having positioned the unit 10. The exemplary upper table top 150 is shown positioned on the neck 20 above the tilt handle 126 and tilt handle support band 127, while the lower table top 154 is positioned above the main handle 128.

The table top(s) 146 may be supported on the unit 10 in any suitable manner. For example, the tilt handle 126 and tilt handle support ring 127 may at least partially support the upper table top 150. If desired, one or more support arms 152 may also or instead be used to support the upper table top 150. For example, the support arms 152 may fold down from the bottom of the upper table top 150 into engagement with the transition 62. The exemplary lower table top 154 may be supported by the main handle 128 and/or one or more support arms (not shown).

Preferred embodiments of the present disclosure thus offer advantages over the prior art and are well adapted to carry out one or more of the objects of this disclosure. However, the present invention does not require each of the components and acts described above and is in no way limited to the above-described embodiments, variables, values, value ranges or methods of operation. Any one or more of the above components, features and processes may be employed in any suitable configuration without inclusion of other such components, features and processes. Moreover, the present invention includes additional features, capabilities, functions, methods, uses and applications that have not been specifically addressed herein but are, or will become, apparent from the description herein, the appended drawings and claims. Further, all of the value and value ranges provided herein and in the appended claims are intended to be approximate, as that term is defined herein.

The methods that may be described above or claimed herein and any other methods which may fall within the scope of the appended claims can be performed in any desired suitable order and are not necessarily limited to any sequence described herein or as may be listed in the appended claims. Further, the methods of the present invention do not necessarily require use of the particular embodiments shown and described herein, but are equally applicable with any other suitable structure, form and configuration of components.

While exemplary embodiments of the invention have been shown and described, many variations, modifications and/or changes of the system, apparatus and methods of the present invention, such as in the components, details of construction and operation, values, arrangement of parts and/or methods of use, are possible, contemplated by the patent applicant(s), within the scope of the appended claims, and may be made and used by one of ordinary skill in the art without departing from the spirit or teachings of the invention and scope of appended claims. Thus, all matter herein set forth or shown in the accompanying drawings should be interpreted as illustrative, and the scope of the disclosure and the appended claims should not be limited to the embodiments described and shown herein.

## Claims

1. A free-standing evaporative air cooling unit comprising:
a base having a bottom configured to rest on or near the ground and an interior cavity;
at least one air inlet and at least one cooling pad disposed within said base, said at least one air inlet and cooling pad configured so that outside air may be drawn therethrough into said interior cavity of said base;
at least one water distributor configured to provide water onto said at least one cooling pad to cool the air passing through said at least one cooling pad;
an elongated neck extending upwardly relative to said base, said neck including an upper end, a lower end and at least one upwardly-oriented air flow passageway in gaseous communication with said interior cavity of said base;
at least one air blower assembly in gaseous communication with said air inlet and said air flow passageway, said air blower assembly configured to draw outside air into said at least one air inlet from outside the unit and through said at least one cooling pad and direct cooled air into said air flow passageway;
a plurality of air outlets in gaseous communication with said air flow passageway and positioned at least 30 inches above said air blower assembly, said air outlets being configured to distribute cooled air from inside the air cooling unit to outside the air cooling unit in a downwardly-angled flow pattern allowing cooled air to be distributed from the air cooling unit in a downwardly-angled direction; and
at least one air acceleration passage in gaseous communication with said interior cavity of said base and said air flow passageway and disposed between said air blower assembly and said air flow passageway, said air acceleration passage configured to increase the velocity of air travelling from said at least one air inlet to said air outlets.

2. The air cooling unit of claim 1 wherein said air acceleration passage has an inverted funnel-shape.

3. The air cooling unit of claim 1 further including a head disposed at said upper end of said neck, said head including said air outlets and having at least one cavity in gaseous communication with said air flow passageway.

4. The air cooling unit of claim 3 further including at least one air diverter disposed within said head above said air flow passageway, said air diverter configured to direct cooled air from said air flow passageway in a 360 degree flow pattern in said cavity of said head and therefrom to outside the air cooling unit through said outlets.

5. The air cooling unit of claim 4 wherein said at least one air diverter includes a single said air diverter having a generally V-shaped profile and being positioned directly above said air flow passageway.

6. The air cooling unit of claim 3 wherein said air outlets are disposed in an outwardly-facing circular pattern above and around said neck, said air outlets being configured to distribute cooled air from said cavity of said head to outside the air cooling unit in a 360 degree flow pattern around the periphery of said neck.

7. The air cooling unit of claim 6 further including a plurality of adjustable louvers, at least one adjustable louver associated with each said air outlet, each said adjustable louver being movable between a plurality of positions to direct cooled air exiting said associated air outlet in any among a plurality of angles.

8. The air cooling unit of claim 6 wherein said plurality of air outlets includes at least five air outlets disposed around the periphery of said neck.

9. The air cooling unit of claim 6 wherein said air outlets are positioned at least 70 inches above said bottom of said base.

10. The air cooling unit of claim 1 wherein each said cooling pad has an upper end and a lower end, said lower end of each said cooling pad being positioned within said base no greater than 24 inches above said bottom of said base.

11. The air cooling unit of claim 1 wherein each said cooling pad has an upper end and a lower end, said lower end of each said cooling pad being positioned within said base no greater than 14 inches above said bottom of said base.

12. The air cooling unit of claim 1 wherein said air outlets are positioned at least 40 inches above said air blower assembly.

13. The air cooling unit of claim 12 wherein said air blower assembly is disposed at least partially within said base.

14. The air cooling unit of claim 1 further including at least first and second air inlets and at least first and second associated cooling pads, said first and second air inlets being disposed on opposite sides of said base.

15. The air cooling unit of claim 14 further including at least one rolling member disposed proximate to said bottom of said base, said at least one rolling member being configured to allow the air cooling system to be movable between locations.
